# EUROPEAN PATENT APPLICATION

(11) **EP 4 432 205 A1**
(43) Date of publication of application: **18.09.2024**
(21) Application number: 22892426.2
(22) Date of filing: 21.09.2022
(51) Int. Cl.: G06Q 30/0601

(54) **SALES PROCESSING PROGRAM, INFORMATION PROCESSING DEVICE, AND SALES PROCESSING SYSTEM**

(30) Priority: 09.11.2021 JP 2021182342; 17.08.2022 JP 2022129789
(71) Applicant: Coocom Co., Ltd, Tokyo 160-0023 (JP)
(72) Inventor: NISHIMURA Keiji, Tokyo 160-0023 (JP)
(74) Representative: Witthoff Jaekel Steinecke Patentanwälte PartG mbB
(86) International application number: PCT/JP2022/035173
(87) International publication number: WO 2023/084925

(57) **Abstract**

Provided is a sales processing program, an information processing device, and a sales processing system that promote appropriate price competition by reflecting intentions of a provider and a seller. An information processing device 1 includes a product/service registration means 102 and a sales condition reception means 103 that respectively receive sales condition information 113, 113a, 113b... and product service information 113, 113a, 113b... from a plurality of information providing sources, a sales condition conversion means 103a that converts, in a case where there is a plurality of pieces of sales condition information 113, 113a, 113b... in different forms, the sales condition information in the different forms into a single form, and a product/service display processing means 104 that displays a price in the content of the product service information 112, 112a, 112b... to a first user at a wholesale price or a price corresponding to the wholesale price in the single form and displays the price in the content of the product service information 112, 112a, 112b... to a second user at a list price or a price corresponding to the list price in the single form.

## Description

### Technical Field

The present invention relates to a sales processing program, an information processing device, and a sales processing system.

### Background Art

As a conventional technique, an information processing device in which a travel agency or the like always provides products at the lowest price has been proposed (see, for example, Patent Literature 1).

The information processing device disclosed in Patent Literature 1 executes a storage procedure of storing discount setting information of a product, and a discounted price calculation procedure of comparing a discount target price that is a price of a discount target product extracted from products on the basis of the discount setting information with a general price that is a price of a product whose search condition is the same as that of the discount target product, and changing the discount target price to a discount change price that is a price lower than the general price.

### Citation List

### Patent Literature

Patent Literature 1: JP 2015-125711 A

### Summary of Invention

### Technical Problem

Since the above-described information processing device is provided by a travel agency or the like at the lowest price, price competition is unnecessarily forced, and there is a possibility that the list price becomes meaningless and only the discounted price becomes important, and there is a risk that the intention of the accommodation side as a service provider (seller of the product) may not be reflected.

On the other hand, there is a service that compares information of a plurality of accommodation reservation mediation services and displays the information in a browsable manner, but the information of the accommodation reservation mediation services is only compared with the total amount of money, and the information such as the list price and the discount rate is not compared. This is because a form of sales conditions of information of a plurality of accommodation reservation mediation services is not common, such as a combination of a general price and a discounted price, a combination of a commission and a wholesale price, and a combination of a list price and a discount rate, and so on. As a result, there is the problem that the user cannot grasp information such as the list price and the discount rate.

An object of the present invention is to provide a sales processing program, an information processing device, and a sales processing system that promote appropriate price competition by reflecting intentions of a provider and a seller.

### Solution to Problem

In order to achieve the above object, one mode of the present invention provides a sales processing program, an information processing device, and a sales processing system described below.
[1] A sales processing program for causing a computer to function as:
   a reception means of receiving each of product service information and sales condition information defining a sales condition of the product service information from a plurality of information providing sources;
   a conversion means of converting a plurality of pieces of sales condition information having different forms into a single form in a case where there is the plurality of pieces of sales condition information having different forms; and
   a display processing means of displaying a price in the content of the product service information to a first user at a wholesale price or a price corresponding to the wholesale price amongst the single form of the sales condition information, and displaying the price in the content of the product service information to a second user at a list price or a price corresponding to the list price amongst the single form.
[2] The sales processing program according to the above-described [1], in which the display processing means changes a display mode of the plurality of pieces of product service information according to a price corresponding to a discount rate amongst the single form.
[3] The sales processing program according to the above-described [1], in which the display processing means changes a display mode of information related to an advertisement of a seller or a provider of the plurality of pieces of product service information according to a price corresponding to a discount rate amongst the single form.
[4] The sales processing program according to the above-described [1], in which the display processing means changes an advertisement transmission mode of a seller or a provider of the plurality of pieces of product service information according to a price corresponding to a discount rate amongst the single form.
[5] The sales processing program according to [1], in which the display processing means integrates and displays information indicating a content of the same product or service among the plurality of pieces of product service information.
[6] The sales processing program according to [1], in which after displaying the price in the content of the product service information to the second user at a wholesale price or a price corresponding to the wholesale price amongst the single form of the sales condition information, upon receiving a purchase application from the second user, the display processing means displays the price to the second user at a list price or a price corresponding to the list price, or the list price or a price corresponding to the list price and the wholesale price or a price corresponding to the wholesale price amongst the single form.
[7] An information processing device including:
   a reception means of receiving each of product service information and sales condition information defining a sales condition of the product service information from a plurality of information providing sources;
   a conversion means of converting a plurality of pieces of sales condition information having different forms into a single form in a case where there is the plurality of pieces of sales condition information having different forms; and
   a display processing means of displaying a price in the content of the product service information to a first user at a wholesale price or a price corresponding to the wholesale price amongst the single form of the sales condition information, and displaying the price in the content of the product service information to a second user at a list price or a price corresponding to the list price amongst the single form.
[8] A sales processing system including:
   a first terminal operated by a seller or a provider of a product or a service;
   a second terminal operated by a first user;
   a third terminal operated by a second user; and
   an information processing device including
   a reception means of receiving each of product service information and sales condition information defining a sales condition of the product service information from a plurality of information providing sources,
   a conversion means of converting a plurality of pieces of sales condition information having different forms into a single form in a case where there is the plurality of pieces of sales condition information having different forms, and
   a display processing means of displaying a price in the content of the product service information to a first user at a wholesale price or a price corresponding to the wholesale price amongst the single form of the sales condition information, and displaying the price in the content of the product service information to a second user at a list price or a price corresponding to the list price amongst the single form.

### Advantageous Effects of Invention

According to the inventions of claims 1, 7, and 8, it is possible to promote appropriate price competition by reflecting the intentions of the provider and the seller.

According to the invention of claim 2, the display mode of the plurality of pieces of product service information can be changed according to the price corresponding to the discount rate in a single form.

According to the invention of claim 3, the display mode of the information related to the advertisement of the seller or the provider of the plurality of pieces of product service information can be changed according to the price corresponding to the discount rate in a single form.

According to the invention of claim 4, the advertisement transmission mode of the seller or the provider of the plurality of pieces of product service information can be changed according to the price corresponding to the discount rate amongst the single form.

According to the invention of claim 5, it is possible to integrate and display information indicating the content of the same product or service among a plurality of pieces of product service information.

According to the invention of claim 6, after displaying the price to a second user at a wholesale price or a price corresponding to the wholesale price amongst a single form of the sales condition information, upon receiving a purchase application from the second user, it is possible to display the price to the second user at a list price or a price corresponding to the list price, or a list price or a price corresponding to the list price and a wholesale price or a price corresponding to the wholesale price amongst the single form.

### Brief Description of Drawings

Fig. 1 is a schematic diagram illustrating an example of a configuration of a sales processing system according to an embodiment.
Fig. 2 is a block diagram illustrating a configuration example of an information processing device according to the embodiment.
Fig. 3 is a schematic diagram illustrating an example of a configuration of user information.
Fig. 4 is a schematic diagram illustrating an example of a configuration of seller/provider information.
Fig. 5 is a schematic diagram illustrating an example of a configuration of product/service information and sales condition information.
Fig. 6A is a schematic diagram illustrating an example of a configuration of product/service information and sales condition information.
Fig. 6B is a schematic diagram illustrating an example of a configuration of product/service information and sales condition information.
Fig. 7 is a schematic diagram illustrating a configuration example of a screen by display processing of the information processing device.
Fig. 8 is a flowchart for describing other company information acquisition operation of the information processing device.
Fig. 9 is a flowchart for explaining a display/sales operation of the information processing device.

### DETAILED DESCRIPTION

### Description of Embodiment

### (Configuration of Sales Processing System)

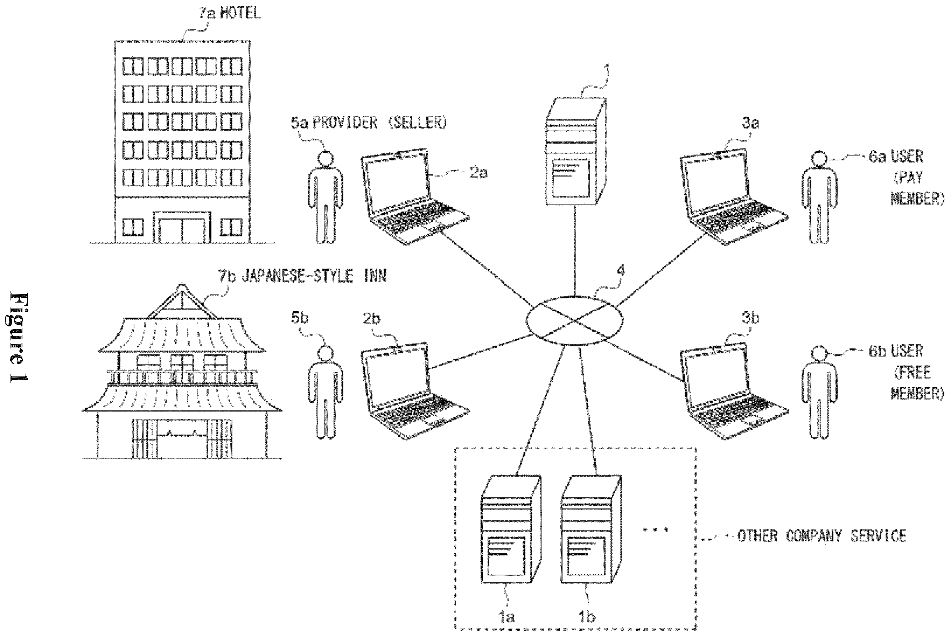

Fig. 1 is a schematic diagram illustrating an example of a configuration of a sales processing system according to an embodiment.

The sales processing system is configured by connecting an information processing device 1, information processing devices 1a, 1b,... of other company service, terminals 2a, 2b,..., and terminals 3a, 3b,... via a network 4 so as to be able to communicate with each other. The terminals 2a, 2b,... are operated by service providers (or seller of a product) 5a, 5b,..., respectively, and the terminals 3a and 3b... are operated by users (or users who purchase the product) 6a, 6b,..., respectively, who receive the service. The providers 5a, 5b,... are, for example, persons who provide accommodation services at a hotel 7a and a Japanese-style Inn 7b, respectively. In addition, the users 6a, 6b,... are persons who receive accommodation services provided in the hotel 7a and the Japanese-style Inn 7b.

The information processing device 1 is, for example, a server type information processing device for providing an accommodation reservation mediation service in a sales processing system, operates in response to a request from each of the terminals 2a, 2b,..., and the terminals 3a, 3b,..., and includes electronic components such as a central processing unit (CPU) and a flash memory having a function for processing information in a main body. Although not illustrated, there may be an administrator or a management company that manages the information processing device 1.

The information processing devices 1a, 1b, ... are sales processing systems different from the information processing device 1, but are server type information processing devices for providing an equivalent accommodation reservation mediation service, and operate in response to a request from each of the terminals 2a, 2b,..., and the terminals 3a, 3b,.... The information processing devices 1a, 1b,... each include an electronic component such as a CPU or a flash memory having a function for processing information in a main body. As will be described later, product/service information managed by the information processing devices 1a, 1b,... is shared by the information processing device 1 via an application programing interface (API) or the like. In addition, application and purchase of the product/service information managed by the information processing devices 1a, 1b,... are performed all at once through the API.

The terminals 2a, 2b... (first terminals) and the terminals 3a, 3b... (second terminal, third terminal) are information processing devices such as a personal computer (PC), a smartphone, a tablet terminal, and a smart watch, and include electronic components such as a CPU and a flash memory having a function for processing information in a main body.

The network 4 is a communication network enabling high-speed communication, and is, for example, a wired or wireless communication network such as the internet, an intranet, or a local area network (LAN).

As an example, the information processing device 1 registers information regarding a service provided by the hotel 7a, the Japanese-style Inn 7b... in response to a request from each of the terminals 2a, 2b... operated by the providers 5a, 5b..., receives shared information regarding a service to be provided by the hotel 7a, the Japanese-style Inn 7b... managed by the information processing devices 1a, 1b... from the information processing devices 1a, 1b... that provide a service different from the service provided by the information processing device 1, and provides the information in a displayable manner on display units of the terminals 3a, 3b... operated by the users 6a, 6b.... Users 6a, 6b... include a pay member (first user) and a free member (second user). The pay member is a user who pays a membership fee to an operator of an accommodation reservation mediation service provided by the sales processing system, and the free member is a user who does not pay the membership fee. As the information regarding the price of the service to be provided in the hotel 7a, the Japanese-style Inn 7b..., a list price and a discount rate in a case where the service is sold at a discounted price are set as sales conditions by the providers 5a, 5b... (instead of the discount rate, a commission to be described later may be set), and the information processing device 1 sells the service at the reduced price to the pay member and sells the service at the list price to a free member, and a difference from the list price is distributed as a commission to the operator of the sales processing system. Furthermore, in a case where the forms of the sales conditions of the information shared by the information processing devices 1a, 1b,... as the information providing sources are different, the information processing device 1 displays and sells the information with the forms aligned. Furthermore, as an example, the information processing device 1 determines the display order of services on the basis of the discount rate set by the providers 5a, 5b,..., and for example, performs display processing on the display unit of the terminals 3a, 3b,... operated by the users 6a, 6b,... in preference to services with a high discount rate. However, the display order is not limited to the display order, and may be differentiated from other services by highlight display or the like, the priority in other methods (advertisement display, advertisement notification, and the like) may be changed, or the display order may be determined on the basis of items other than the discount rate. Hereinafter, the configuration, the operation, and other modifications will be described in detail in this order.

### (Configuration of Information Processing Device)

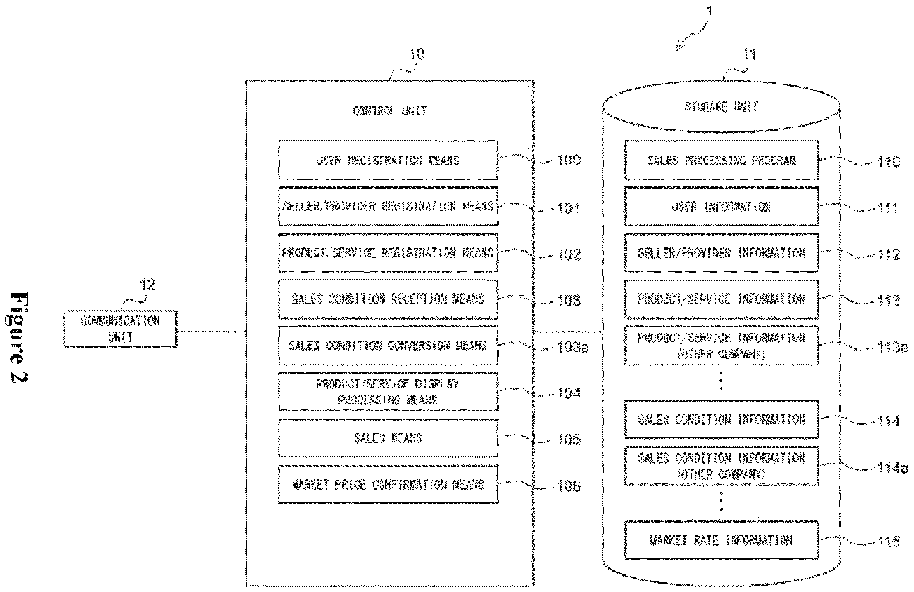

Fig. 2 is a block diagram illustrating a configuration example of the information processing device 1 according to the embodiment.

The information processing device 1 includes a control unit 10 that includes a CPU or the like, controls each unit, and executes various programs, a storage unit 11 that includes a storage medium such as a flash memory and stores information, and a communication unit 12 that communicates with the outside through the network 4.

By executing a sales processing program 110 to be described later, the control unit 10 functions as a user registration means 100, a seller/provider registration means 101, a product/service registration means 102 as a reception means, a sales condition reception means 103 as a reception means, a sales condition conversion means 103a, a product/service display processing means 104, a sales means 105, a market rate confirmation means 106, and the like.

In response to a request from each of the terminals 3a, 3b,...(users 6a, 6b...), the user registration means 100 receives registration of information on the users 6a, 6b... and stores the information in the storage unit 11 as the user information 111.

The seller/provider registration means 101 receives registration of information regarding the hotel 7a and the Japanese-style Inn 7b... in response to a request from each of the terminals 2a, 2b...(provider (or seller of the product) 5a, 5b...), and stores the information in the storage unit 11 as seller/provider information 112.

In response to a request from each of the terminals 2a, 2b,...(provider (or seller of the product) 5a, 5b...), the product/service registration means 102 receives registration of information associated with a product/service and stores the information in the storage unit 11 as the product/service information 113. In addition, the product/service registration means 102 receives registration of information on a shared product/service from the information processing devices 1a, 1b..., and stores the information in the storage unit 11 as product/service information 113a, 113b.... Note that the product/service information 113a, 113b,... includes the sales condition information 114a, 114b,....

In response to a request from each of the terminals 2a, 2b,...(provider (or seller of the product) 5a, 5b...), the sales condition reception means 103 receives registration of information on the sales conditions of the products/services and stores the information in the storage unit 11 as the sales condition information 114.

The sales condition conversion means 103a aligns the forms when each the sales condition information 114a, 114b... of the product/service information 113a, 113b... is different from the form of the sales condition information 114. Details of the form will be described later.

In response to a request from each of the terminals 3a, 3b... (users 6a, 6b...), the product/service display processing means 104 displays contents of the product/service information 113, 113a, 113b... on the display unit of each of the terminals 3a, 3b... with reference to the user information 111 and the sales condition information 114, 114a, 114b... of each of the users 6a, 6b....

In response to a request from each of the terminals 3a, 3b... (users 6a, 6b...), the sales means 105 performs sale processing of the products/services of the product/service information 113, 113a, 113b... with reference to the user information 111 and the sales condition information 114, 114a, 114b... of each of the users 6a, 6b....

In order to confirm the market rate of the list price and discount rate of the product/service information 113, the market rate confirmation means 106 collates the list price or the discount rate with the product/service information 113a, 113b.... In addition, the market rate confirmation may refer to the market rates in other sales processing systems other than the product/service information 113a, 113b,.... The market rate confirmation means 106 confirms that the list price and the discount rate of the product/service information 113 do not greatly deviate from the market rate, and determines whether there is fraud in the registered content of the sales condition information 114.

The storage unit 11 stores a sales processing program 110 for operating the control unit 10 as each means 100-106 described above, user information 111, seller/provider information 112, product/service information 113, product/service information 113a, 113b..., sales condition information 114, sales condition information 114a, 114b..., market rate information 115, and the like.

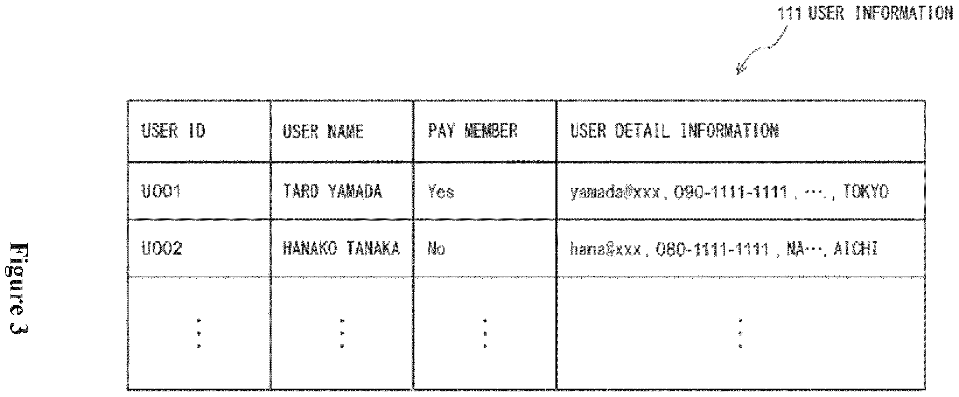

Fig. 3 is a schematic diagram illustrating an example of a configuration of the user information 111.

The user information 111 includes user detailed information indicating information such as a user ID for identifying a user, a user name, a pay member indicating whether or not the user is a pay member, a contact address of the user, and a payment method.

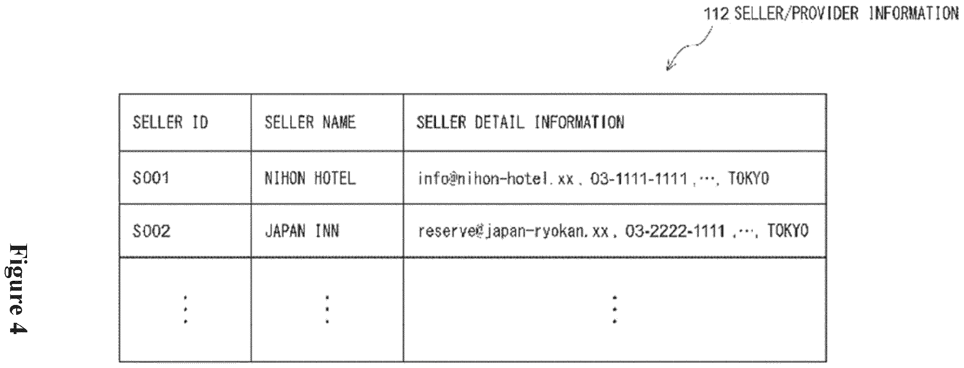

Fig. 4 is a schematic diagram illustrating an example of a configuration of the seller/provider information 112.

The seller/provider information 112 has detailed seller information indicating information such as a seller ID for identifying a seller, a seller name, a contact address of the seller, facility information, and corporation information. Note that the facility information is, for example, a facility name, an area, an address, a telephone number, a FAX number, an e-mail, an age of a building, a reconstruction year, the number of rooms, the number of accommodated rooms, longitude/latitude information, a payment method, a bank code, a branch code, account information, information regarding SNS, and the like. Further, the corporation information is, for example, a corporation name, a corporation address, a billing destination telephone number, a billing destination FAX number, person in charge information, and the like.

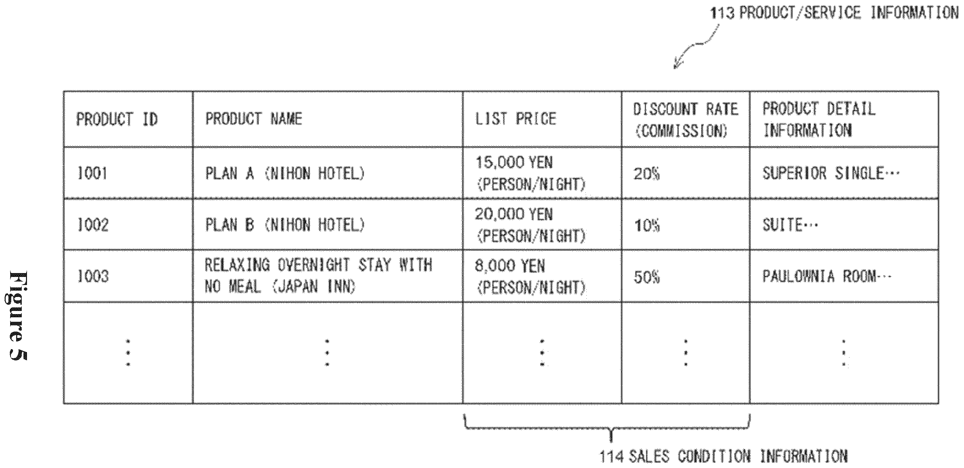

Fig. 5 is a schematic diagram illustrating an example of a configuration of the product/service information 113 and the sales condition information 114.

The product/service information 113 includes product detailed information which is information such as a product ID for identifying a product, a product name, a list price of a product, a discount rate which is a discount rate with respect to the list price in a case of selling to the pay member, a room name of a product, a course content, and other details. Note that the other detailed information is, for example, facility introductory essay, cautions regarding reservation, image information regarding facility, plan image information, room name, room capacity information, plan introductory essay, meal conditions, payment method, point information, cancellation fee information, liquidation information (available time limit for reservation), plan list price, plan sales price, plan discount rate, plan option information, and the like. In addition, the list price and the discount rate are treated as the sales condition information 114. In addition, the discount rate indicates a discount rate with respect to a list price when a product is sold to the pay member, and the discounted price is distributed to the providers 5a, 5b,.... When the product is sold to the free member, the product is sold at the list price, and the discounted price is distributed to the providers 5a, 5b,... by an amount obtained by subtracting the discounted price from the list price as a commission to the operator of the accommodation reservation mediation service. Therefore, the discount rate may be replaced with the amount of the commission.

Note that the example in which the list price and the discount rate are set as the sales condition information 114 as described above is the simplest, and the price corresponding to the discount rate may include a fee allocated to the operator of the accommodation reservation mediation service and a discount amount actually discounted from the list price, or may further include another commission and another discount amount without departing from the gist of the invention.

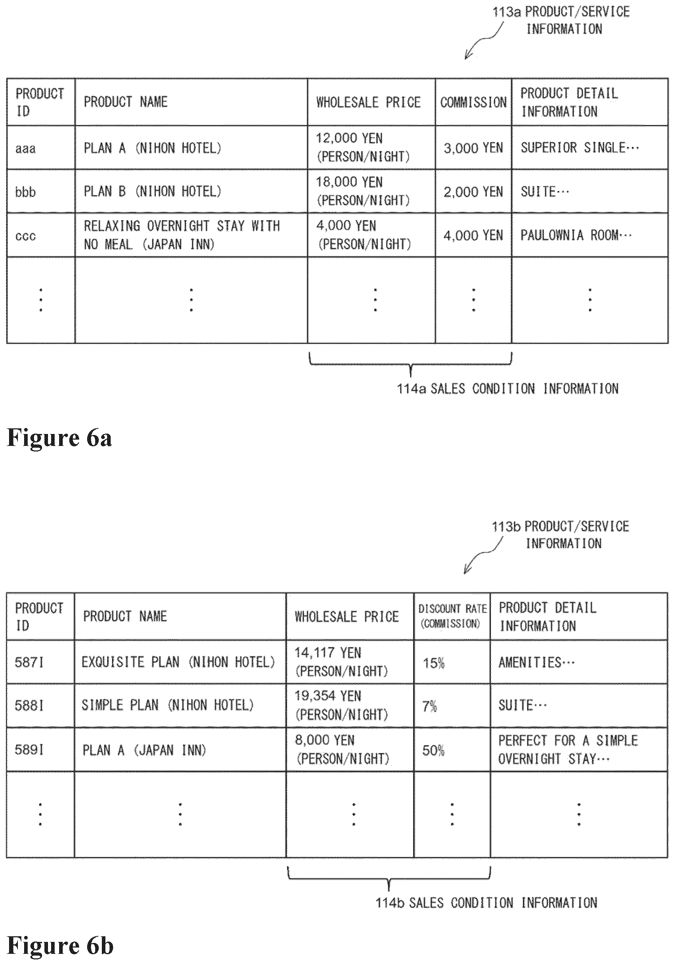

Figs. 6A and 6B are schematic diagrams illustrating examples of configurations of the product/service information 113a, 113b and the sales condition information 114a, 114b.

As illustrated in Fig. 6A, the product/service information 113a is same as the product/service information 113 in having the product ID, the product name, and the product detailed information and different in having a product wholesale price and a commission. It is assumed that the wholesale price and the commission are treated as the sales condition information 114a. In addition, the wholesale price indicates a price at the time of selling the product to the pay member, and the wholesale price is distributed to the providers 5a, 5b,.... When the product is sold to the free member, the product is sold at a price obtained by adding a commission to the wholesale price, and the wholesale price is distributed to the providers 5a, 5b,...., and the commission is distributed to the operator of the accommodation reservation mediation service.

Further, as illustrated in Fig. 6B, the product/service information 113b is same as the product/service information 113 in having the product ID, the product name, and the list price, the discount rate, and the product detailed information.

Note that, as illustrated in the sales condition information 114a and 114b, these items are not limited to the combination of the wholesale price and the commission, the combination of the list price and the discount rate, but may be a combination of the wholesale price and the list price, a combination of the wholesale price and the discount rate, a combination of the list price and the commission, or other items indicating equivalent prices (net price, gross price, and the like) and a combination thereof.

In addition, although the plan information of accommodation is mainly described for the above-described product/service information 113a, 113b (sales condition information 114, 114a, 114b), the product/service information 113a, 113b may further include information regarding a facility of an accommodation and facility information regarding a shared facility, or may be separately included as other information.

### (Operation of Information Processing Device)

Next, functions of the present embodiment will be described separately for (1) preparation operation and (2) display/sales operation.

### (1) Preparation Operation

### (1-1) Registration of Own Service

First, the users 6a, 6b,... operate the terminals 3a, 3b,... to register user information in order to use the accommodation reservation mediation service provided by the information processing device 1. The terminals 3a, 3b,... transmit a registration request of the user information to the information processing device 1.

Next, in response to a request from each of the terminals 3a, 3b,...(users 6a, 6b...), the user registration means 100 of the information processing device 1 receives registration of information on the users 6a, 6b... and stores the information in the storage unit 11 as the user information 111 as illustrated in Fig. 3.

Furthermore, the providers 5a and 5b... operate the terminals 2a and 2b... to register the information of the hotel 7a and the Japanese-style Inn 7b... for allowing the users 6a and 6b... to use the information, respectively. The terminals 2a, 2b,... transmit a registration request of the information of the hotel 7a and the Japanese-style Inn 7b to the information processing device 1.

Next, the seller/provider registration means 101 of the information processing device 1 receives registration of information regarding the hotel 7a and the Japanese-style Inn 7b in response to a request from each of the terminals 2a, 2b... 5a, 5b..., and stores the information in the storage unit 11 as the seller/provider information 112 as illustrated in Fig. 4.

Furthermore, the providers 5a and 5b... operate the terminals 2a and 2b... to register the information on the services to be provided in the hotel 7a and the Japanese-style Inn 7b... for allowing the users 6a and 6b... to use the information, respectively. The terminals 2a, 2b... transmit, to the information processing device 1, a registration request of information regarding services to be provided in the hotel 7a, the Japanese-style Inn 7b....

Next, in response to a request from each of the terminals 2a, 2b,...(provider 5a, 5b...), the product/service registration means 102 of the information processing device 1 receives registration of information associated with a product/service and stores the information in the storage unit 11 as the product/service information 113 as illustrated in Fig. 5.

Furthermore, the providers 5a and 5b... operate the terminals 2a and 2b... to register the sales conditions on the services to be provided in the hotel 7a and the Japanese-style Inn 7b... for allowing the users 6a and 6b... to use the information, respectively. The terminals 2a, 2b,... transmit a registration request of the sales conditions on the services to be provided in the hotel 7a and the Japanese-style Inn 7b to the information processing device 1.

In response to a request from each of the terminals 2a, 2b,...(provider 5a, 5b...), the sales condition reception means 103 receives registration of the sales conditions of the products/services and stores the information in the storage unit 11 as the sales condition information 114 as illustrated in Fig. 5.

### (1-2) Registration of Other Company Service

Furthermore, the providers 5a and 5b... operate the terminals 2a and 2b... to register the information of the hotel 7a and the Japanese-style Inn 7b... for allowing the users 6a and 6b... to use the information, respectively. The terminals 2a, 2b... transmit a registration request of information of the hotel 7a, and the Japanese-style Inn 7b... to the information processing devices 1a, 1b... that provide an accommodation reservation mediation service of other company. Note that the other company means that there are the accommodation reservation mediation service provided by the information processing devices 1a, 1b,... and the accommodation reservation mediation service provided by the information processing device 1. In general, the operation entities are different from each other. However, the operation entities are not necessarily different from each other, and the object of the present invention is achieved even if the same company operates.

Furthermore, the providers 5a and 5b... operate the terminals 2a and 2b... to register the information on the services to be provided in the hotel 7a and the Japanese-style Inn 7b... for allowing the users 6a and 6b... to use the information, respectively. The terminals 2a, 2b... transmit, to the information processing devices 1a, 1b..., a registration request of information regarding services to be provided in the hotel 7a, the Japanese-style Inn 7b....

Next, in response to a request from each of the terminals 2a, 2b,...(provider 5a, 5b...), the information processing devices 1a and 1b receive registration of information associated with a product/service and stores the information in the storage unit 11 as the product/service information 113a, 113b.

Furthermore, the providers 5a and 5b... operate the terminals 2a and 2b... to register the sales conditions on the services to be provided in the hotel 7a and the Japanese-style Inn 7b... for allowing the users 6a and 6b... to use the information, respectively. The terminals 2a, 2b,... transmit a registration request of the sales conditions on the services to be provided in the hotel 7a and the Japanese-style Inn 7b to the information processing devices 1a, 1b....

In response to a request from each of the terminals 2a, 2b,...(provider 5a, 5b...), the information processing devices 1a, 1b,... receives registration of the sales conditions of the products/services and stores the information in the storage unit 11 as the sales condition information 114a, 114b,....

### (1-3) Acquisition of Information on Other Companies

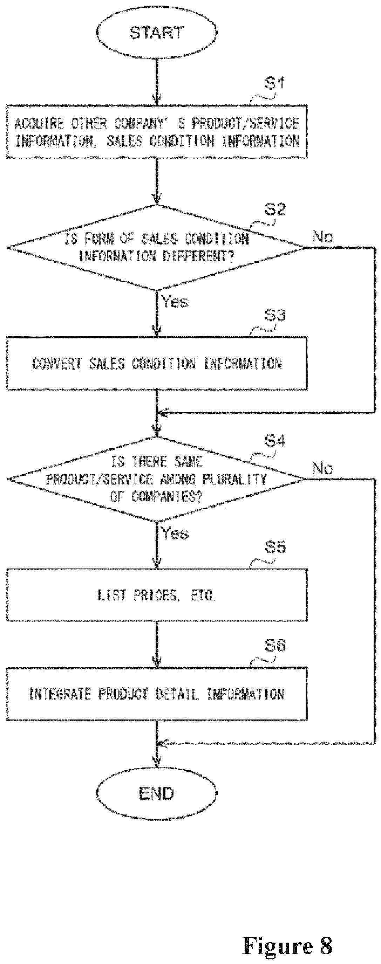

Fig. 8 is a flowchart for describing other company information acquisition operation of the information processing device.

Next, the product/service registration means 102 of the information processing device 1 communicates with the information processing devices 1a, 1b..., acquires information regarding the shared product/service from the information processing devices 1a, 1b... (S1), receives registration, and stores the information in the storage unit 11 as the product/service information 113a, 113b....

In addition, the sales condition conversion means 103a of the information processing device 1 (S3) aligns the forms when each of the sales condition information 114a, 114b... of the product/service information 113a, 113b... is different (S2: Yes) from the form of the sales condition information 114.

Specifically, when the sales condition information 114a is not a combination of a list price and a discount rate but a combination of a wholesale price and a commission as in the product/service information 113a illustrated in Fig. 6A, the sales condition conversion means 103a changes the wholesale price "12,000 yen" and the commission "3,000 yen" to the list price "15,000 yen" and the discount rate "20%" to align the forms. Note that the change may be performed using a calculation formula prepared in advance between the forms, or may be performed by analyzing the context.

Further, the product/service registration means 102 determines whether or not there is a product/service which is the same or estimated to be the same between the product/service information 113 and the product/service information 113a, 113b,... (S4; Yes), plan information such as price, with or without a meal, content of a meal, content of check-in/out, room type, size of room, room number, plan name, benefit content, service content, condition of number of people, accommodation condition (limited to residents in the prefecture, etc.), image content, product introduction text content, child fee information, cancellation policy, room facility, non-smoking/smoking, payment condition..., and the like are listed (S5), and product detailed information described later is integrated for basic information (S6). For the plan information, products/services that are the same or estimated to be the same are displayed in a list as described later. For the basic information, specifically, for example, information such as images of facility exteriors and room interiors and the like, a name, a location, a comment, a word of mouth, an evaluation point, and the like of a hotel or a Japanese-style Inn is merged, and a missing item is supplemented with a satisfactory item of other company.

In order to confirm the market rate of the list price and discount rate of the product/service information 113, the market rate confirmation means 106 of the information processing device 1 collates the list price or the discount rate with the product/service information 113a, 113b.... In addition, the market rate confirmation may refer to the market rates in other sales processing systems other than the product/service information 113a, 113b,.... The market rate confirmation means 106 confirms that the list price and the discount rate of the product/service information 113 do not greatly deviate from the market rate, and determines whether there is fraud in the registered content of the sales condition information 114. This is because if the list price is set higher than the list price in other accommodation facility mediation services, the discount rate can be substantially increased without reducing the discounted price, and the intentional price manipulation of the providers 5a, 5b... is prevented. The market rate confirmation means 106 may confirm only the list price according to the policy of the accommodation facility mediation service, may confirm only the discounted price, or may confirm both, but the price manipulation can be effectively prevented by confirming the list price. In addition, it suffices that the difference in price fall within a predetermined range, and the difference in price is not necessarily the same. In addition, in a case where the price is set beyond the predetermined range, the market rate confirmation means 106 may display an alert on the price setting screen of the providers 5a, 5b,..., may notify the administrator of the accommodation facility mediation service, or may disable selling.

Next, the information processing device 1 displays and sells the contents of the services provided by the providers 5a, 5b... to the terminals 3a, 3b... operated by the users 6a, 6b... on the basis of the information registered in the above operation. Hereinafter, the display/sales operation will be described in detail.

### (2) Display/Sales Operation

First, the users 6a, 6b,... operate the terminals 3a, 3b,... to request display of service contents provided by the providers 5a, 5b,.... The terminals 3a, 3b,... transmit a display request to the information processing device 1.

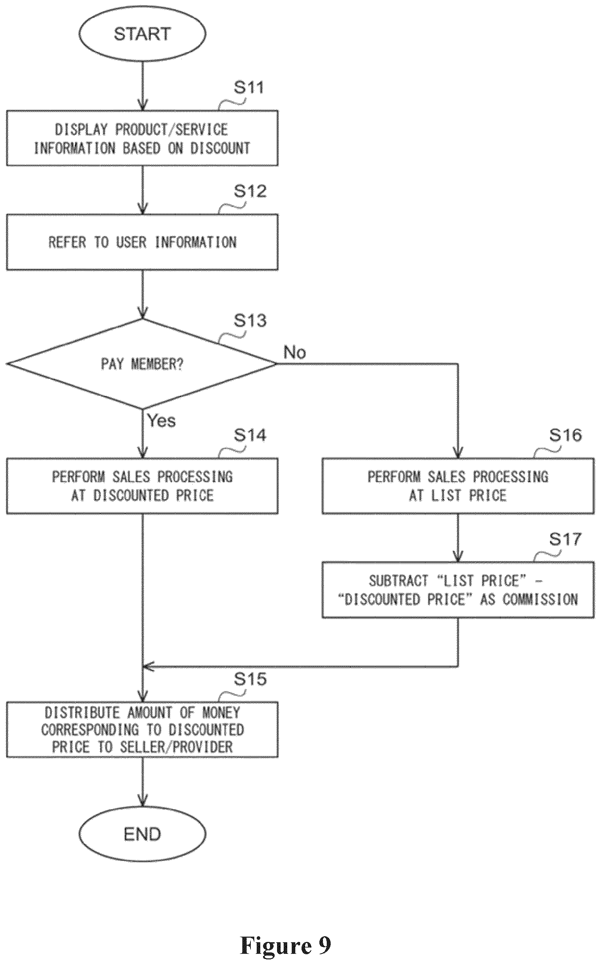

Fig. 9 is a flowchart for explaining a display/sales operation of the information processing device.

In response to a display request from each of the terminals 3a, 3b,... (users 6a, 6b...), the product/service display processing means 104 of the information processing device 1 refers to the sales condition information 114 and performs display processing of the content of the product/service information 113 on the display units of the terminals 3a, 3b... in order of the discount rate (S11). The following screens are displayed on the display units of the terminals 3a, 3b,.... Note that display modes other than the order of discount rates will be described later.

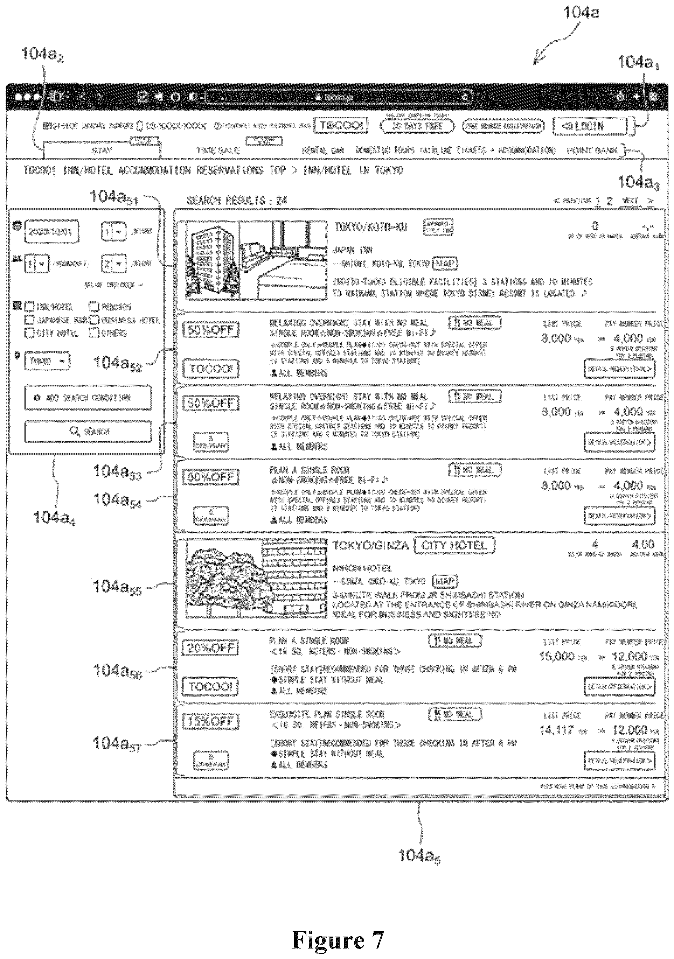

Fig. 7 is a schematic diagram illustrating a configuration example of a screen by display processing of the information processing device.

A display screen 104a is an example of a screen displayed on the display unit of each of the terminals 3a, 3b,..., and includes a header 104a1, an accommodation tag 104a2 for displaying the accommodation reservation mediation service, a tag 104a3 for displaying other services, a search condition input field 104a4 for inputting a search condition of the accommodation reservation mediation service, and a search result display field 104a5.

The search result display field 104a5 includes basic information 104a51, 104a55 and plan information 104a52 to 104a54, 104a56, 104a57 of the service information, and is displayed in order of discount rate for each plan as an example. The basic information 104a51, 104a55 displays information such as images of facility exteriors and room interiors and the like, a name, a location, a comment, a word of mouth, an evaluation point of the hotel or the Japanese-style Inn, and the plan information 104a52 to 104a54, 104a56, 104a57 includes a discount rate of a plan, specific contents, a standard price which is a list price, a pay member price which is a discounted price (a discounted price), and a detail/reservation button for confirming details or executing a reservation.

The plan information 104a52 to 104a54 is a plan having the same contents, and a plan of a service managed by the information processing device 1 and a plan of a service managed by the information processing devices 1a, 1b... are written together. In addition, the plan information 104a56, 104a57 is a plan having the same contents, and a plan of a service managed by the information processing device 1 and a plan of a service managed by the information processing devices 1a, 1b... are written together. In Fig. 7, the prices of the plan information 104a52 to 104a54 are the same, but the list prices of the plan information 104a56 to 104a57 are different. In this case, as a display mode, the arrangement order of plans with the same content is displayed side by side at a discount rate. However, in addition, the plans may be arranged by ascending or descending order such as a price, evaluation (word of mouth), a discount amount, the number of reservations, a distance, a size of a room, a number of word of mouth, and an evaluation level, or may be arranged by a compound term thereof. In a case where the discount rates are the same, a plan of a service managed by the information processing device 1 may be preferentially displayed.

Note that the product/service display processing means 104 displays the items in order of discount rate by default as a display mode, for example. However, in a case where the users 6a, 6b,... select another arrangement order (in order of price, order of arrival, order of Japanese syllabary, order of region, order of distance (from user), and the like), the items may be displayed by being sorted in the arrangement order, or the items may be displayed in order of discount rate as a second prioritized sorting method among the arrangement orders.

Note that the product/service display processing means 104 may refer to the user information 111 of the users 6a, 6b,... to display the list price to the free member and display only the discounted price to the pay member. In a case where the discounted price is also displayed to the free member, and the free member operates to wish to purchase at the discounted price, the registration screen to the pay member may be displayed.

Next, the users 6a, 6b... select a desired service from the services to be provided by the providers 5a, 5b... as illustrated in Fig. 7, and operate the terminals 3a, 3b... to request purchase of the service. The terminals 3a, 3b,... transmit a purchase request to the information processing device 1.

The sales means 105 of the information processing device 1 first refers to the user information 111 of the users 6a, 6b... in order to perform sales processing of the product/service of the product/service information 113 in response to the request of each of the terminals 3a, 3b... (users 6a, 6b...) (S12).

In a case where the users 6a, 6b,... are pay members (S13; Yes), the sales means 105 performs sales processing at a discounted price (S14). Specifically, an operation of making a payment, receiving money at a discounted price from the users 6a, 6b..., and transmitting a reservation request to the providers 5a, 5b... is performed.

Next, the sales means 105 distributes money corresponding to the discounted price received from the users 6a, 6b,... through the sales processing to the providers 5a, 5b,... (S15).

Further, when the users 6a, 6b,... are not the pay member (in the case of the free member) (S3; No), the sales means 105 performs the sales processing at a list price (S16) .

Next, the sales means 105 subtracts an amount of money obtained by subtracting the discounted price from the list price received from the users 6a, 6b,... through the sales processing as an operating commission (S17), and distributes the amount of money corresponding to the discounted price to the providers 5a, 5b,... (S15).

### (Effects of Embodiment)

According to the above-described embodiment, the input of the list price and the discount rate of the service is received from the providers 5a, 5b,..., and the service is displayed and presented to the users 6a, 6b,... in the order of the discount rate, and the service is sold at the discounted price to the pay member and is sold at the list price to the free member, and the difference between the list price and the discounted price is set as the operation side commission. Therefore, it is possible to determine the display order of the products by reflecting the intention of the provider and the seller such as the list price and the actual sales amount, and it is possible to prevent competition only for the sales price at which the display order is determined by the sales price, and promote appropriate price competition. In addition, since it is configured to display in the order of the discount rates, it is possible to present services in the order of services with high relative value to the users 6a, 6b, ....

Further, in addition to the product/service information 113 managed by the information processing device 1, it is enabled to display also the product/service information 113, 113a, 113b,... after acquiring said product/service information 113a, 113b managed by the information processing devices 1a, 1b,... and converting the ones having different forms of sales conditions into similar forms. As a result, the users 6a, 6b,... are enabled to vertically browse the product/service information 113, 113a, 113b,... and further grasp information such as a list price and a discount rate, and the like. Therefore, for example, it is easy to compare multiple plans with the same contents from the standpoint of users 6a, 6b.... Further, the user can make a reservation without moving to the website of each accommodation reservation mediation service, and the convenience of the users 6a, 6b... is improved.

In addition, in a case where the price is provided at the wholesale price, by describing, together with the wholesale price, the list price obtained by adding the commission on the wholesale price, the user can perform comparison and examination at both the wholesale price and the list price. In addition, in a case where the price is provided at the list price, by describing, together with the list price, the wholesale price obtained by subtracting the commission from the list price, the user can perform comparison and examination at both the list price and the wholesale price.

In addition, with respect to the product/service of the product/service information 113, the market rate confirmation means 106 acquires the market rate of the same product/service in another accommodation facility mediation service, and confirms whether there is not a large difference between the list price of the sales condition information 114 and the discounted price. Therefore, intentional price manipulation of the providers 5a and 5b... can be prevented, and the list price can be set higher than the list price in the other accommodation facility mediation service, and such a behavior of substantially increasing the discount rate without lowering the discounted price can be prevented.

### [Other Embodiments]

The present invention is not limited to the above embodiment, and various modifications can be made without departing from the gist of the present invention.

For example, in the above example, an accommodation reservation of a hotel or a Japanese-style Inn has been described as an example, but the reservation may be a reservation of a private lodging, a workcation, a camping site, glamping, and the like. Although the accommodation facility mediation service has been described as an example, it may be a car rental mediation service, a tour mediation service, an airline ticket sales service, or an electronic commerce (EC) site that sells goods. In addition, the product sale is not limited to an actual product, but may be a product sale of an electronic medium such as a video or an electronic book, and the service may be a service such as water utility cost, a rent, a benefit service, an information delivery service, and the like.

Further, in the above-described embodiment, the example in which the difference between the list price and the discounted price is used as the commission only in the case of selling to the free member has been described. However, the commission may be received from the pay member, or the commission may be subtracted from the discounted price and distributed to the providers 5a, 5b,..., and can be defined by the policy of the accommodation facility mediation service. In addition, in the case of selling to the free member, it is not necessary to set the entire difference between the list price and the discounted price as a commission, and the difference may be partially distributed to the providers 5a, 5b... or returned to the users 6a, 6b....

In addition, the first user is not limited to a person who pays a membership fee as a pay member, and may be a person who browses an advertisement presented by the accommodation reservation mediation service instead of paying the membership fee. In this case, for example, an advertisement fee paid by the advertiser is allocated to the membership fee. Furthermore, for example, instead of further causing the user to browse the advertisement to be browsed, the user may be caused to use a credit card, or to use another payment system. In this case, the cost paid by the credit card issuing company and the settlement system operating company is allocated to the membership fee. Even in other services, when the first user uses the service and money is paid from other company, the mechanism can be similarly used. Furthermore, even in a case where there is no money paid by other company, in a case where there is some service provision from the first user to the operator side of the accommodation reservation mediation service, a function similar to that of the pay member may be similarly provided. In addition, the second user is not limited to a person who does not pay a membership fee at all, and may be a person who pays a smaller membership fee than the first user, or may use a service having a difference from other services used by the first user as described above.

In addition, in the above embodiment, as the display mode of the product/service information 113, 113a, 113b,..., an example in which display is preferentially performed in a case where the discount rate is high has been described, but the following may be performed. For example, as a display mode, the service information may be highlighted (for example, provision of enclosure to service information, provision of icons, and the like) on the website of the accommodation reservation mediation service according to the discount rate. In addition, an advertising space may be provided in a website of the accommodation reservation mediation service or an advertisement may be preferentially displayed according to a discount rate (a display mode of information related to an advertisement). Further, the distribution frequency of the mail magazine may be increased according to the discount rate. Furthermore, as an advertisement transmission mode, the amount of posting or advertisement on a social networking site (SNS) may be increased according to a discount rate. In addition, as the advertisement transmission mode, advertisement may be enhanced (for example, when the discount rate is high, the service information is advertised on a digital signage other than the web site) according to a discount rate. In addition, the sales support cost may be provided (a predetermined support cost is provided according to a discount rate) to a provider, a seller, other company service, an online travel agent (OTA), or a whole cellar according to a discount rate.

In the above embodiment, the functions of each of the means 100 to 106 of the control unit 10 are implemented by the program, but all or a part of the means may be implemented by hardware such as an ASIC. In addition, the program employed in the above embodiment can be provided in a state of being stored in a recording medium such as a CD-ROM. Replacement, deletion, addition, and the like of the above steps described in the above embodiments can be made within the scope not changing the gist of the present invention.

Further, in order to achieve the above object, another mode of the present invention provides a sales processing program, an information processing device, and a sales processing system described below.
[1] A sales processing program for causing a computer to function as:
   a reception means of receiving an input of a list price, a discount rate, or a commission of a plurality of services or products by a seller or a provider; and
   a display processing means of displaying the plurality of services or products at a discounted sales price according to the discount rate or a sales price obtained by subtracting the commission from the list price to a first user, and displaying the plurality of services or products at the list price to a second user.
[2] The sales processing program according to the above-described [1], in which the display processing means displays the plurality of services or products in order of the discount rate or the commission.
[3] The sales processing program according to the above-described [1] or [2], further functions as a sales means of collecting an amount obtained by subtracting the discounted sales price from the list price or the commission in a case where the plurality of services or products are sold to the first user at the sales price obtained by subtracting the discounted sales price or the commission, then the plurality of services or products are sold to the second user at the list price, and thereafter the plurality of services or products are sold to the second user at the list price.
[4] The sales processing program according to the above-described [3], in which the sales means collects a membership fee from the first user.
[5] The sales processing program according to the above-described [3], in which the sales means causes the first user to browse an advertisement.
[6] The sales processing program according to the above-described [1] or [2], in which the display processing means displays the plurality of services or products together with the list price in order of a discount rate or a commission to the second user.
[7] The sales processing program according to any one of the above-described [1] to [3], further causing another sales processing system to function as confirmation means of acquiring an amount of the service or the product sold and confirming that a difference between the list price and the amount sold is within a predetermined value.
[8] An information processing device including:
   a reception means of receiving an input of a list price, a discount rate, or a commission of a plurality of services or products by a seller or a provider; and
   a display processing means of displaying a sales price obtained by discounting the plurality of services or products in order of a discount rate or a commission to a first user, and displaying the list price of the plurality of services or products in order of the discount rate or the commission to a second user.
[9] A sales processing system including:
   a first terminal operated by a seller or a provider of a service or a product;
   a second terminal operated by a first user;
   a third terminal operated by a second user; and
   an information processing device including
   a reception means of receiving input of a list price and a discount rate or a commission of a plurality of services or products from the first terminal, and a display processing means of displaying a sales price obtained by discounting the plurality of services or products in order of the discount rate or the commission to the second terminal, and displaying the list price of the plurality of services or products in order of the discount rate or the commission to the third terminal.

### Industrial Applicability

Provided is a sales processing program, an information processing device, and a sales processing system that promote appropriate price competition by reflecting intentions of a provider and a seller. Reference Signs List

- 1, 1a, 1b: Information processing device
- 2a, 2b: Terminal
- 3a, 3b: Terminal
- 4: Network
- 5a, 5b: Provider
- 6a, 6b: User
- 7a: Hotel
- 7b: Japanese-style Inn
- 10: Control unit
- 11: Storage unit
- 12: Communication unit
- 100: User registration means
- 101: Seller/provider registration means
- 102: Product/service registration means
- 103: Sales condition reception means
- 103a: Sales condition conversion means
- 104: Product/service display processing means
- 105: Sales means
- 106: Market rate confirmation means
- 110: Sales processing program
- 111: User information
- 112: Provider information
- 113: Product/service information
- 113a, 113b: Service information (other company)
- 114: Sales condition information
- 114a, 114b: Sales condition information (other company)
- 115: Market rate information

## Claims

1. A sales processing program for causing a computer to function as:
a reception means of receiving each of product service information and sales condition information defining a sales condition of the product service information from a plurality of information providing sources;
a conversion means of converting a plurality of pieces of the sales condition information having different forms into a single form in a case where there is the plurality of pieces of sales condition information having different forms; and
a display processing means of displaying a price in the content of the product service information to a first user at a wholesale price or a price corresponding to the wholesale price amongst the single form of the sales condition information, and displaying the price in the content of the product service information to a second user at a list price or a price corresponding to the list price amongst the single form.

2. The sales processing program according to claim 1, wherein the display processing means changes a display mode of the plurality of pieces of product service information according to a price corresponding to a discount rate amongst the single form.

3. The sales processing program according to claim 1, wherein the display processing means changes a display mode of information related to an advertisement of a seller or a provider of the plurality of pieces of product service information according to a price corresponding to a discount rate amongst the single form.

4. The sales processing program according to claim 1, wherein the display processing means changes an advertisement transmission mode of a seller or a provider of the plurality of pieces of product service information according to a value corresponding to a discount rate amongst the single form.

5. The sales processing program according to claim 1, wherein the display processing means integrates and displays information indicating a content of the same product or service among the plurality of pieces of product service information.

6. The sales processing program according to claim 1, wherein after displaying the price in the content of the product service information to the second user at a wholesale price or a price corresponding to the wholesale price amongst the single form of the sales condition information, upon receiving a purchase application from the second user, the display processing means displays the price to the second user at a list price or a price corresponding to the list price, or the list price or a price corresponding to the list price and the wholesale price or a price corresponding to the wholesale price amongst the single form.

7. An information processing device comprising:
a reception means of receiving each of product service information and sales condition information defining a sales condition of the product service information from a plurality of information providing sources;
a conversion means of converting a plurality of pieces of the sales condition information having different forms into a single form in a case where there is the plurality of pieces of sales condition information having different forms; and
a display processing means of displaying a price in the content of the product service information to a first user at a wholesale price or a price corresponding to the wholesale price amongst the single form of the sales condition information, and displaying the price in the content of the product service information to a second user at a list price or a price corresponding to the list price amongst the single form.

8. A sales processing system comprising:
a first terminal operated by a seller or a provider of a product or a service;
a second terminal operated by a first user;
a third terminal operated by a second user;
an information processing device including
a reception means of receiving each of product service information and sales condition information defining a sales condition of the product service information from a plurality of information providing sources,
a conversion means of converting a plurality of pieces of the sales condition information having different forms into a single form in a case where there is the plurality of pieces of sales condition information having different forms, and
a display processing means of displaying a price in the content of the product service information to a first user at a wholesale price or a price corresponding to the wholesale price amongst the single form of the sales condition information, and displaying the price in the content of the product service information to a second user at a list price or a price corresponding to the list price amongst the single form.
